# EUROPÄISCHE PATENTSCHRIFT

(11) **EP 3 050 415 B1**
(45) Veröffentlichungstag und Bekanntmachung des Hinweises auf die Patenterteilung: **16.08.2017**
(21) Anmeldenummer: 16401003.5
(22) Anmeldetag: 18.01.2016
(51) Int. Cl.: A01B 33/06, A01B 33/12

(54) **BODENBEARBEITUNGSMASCHINE**
SOIL PROCESSING MACHINE
MACHINE DE TRAVAIL DU SOL

(30) Priorität: 22.01.2015 DE 102015100881
(43) Veröffentlichungstag der Anmeldung: 03.08.2016
(73) Patentinhaber: Amazonen-Werke H. Dreyer GmbH & Co. KG, 49205 Hasbergen (DE)
(72) Erfinder: Ehlers, Jan-Gerd, 26160 Bad Zwischenahn (DE)

(56) Entgegenhaltungen:
- EP-A2- 0 407 725
- DE-A1- 3 930 683
- DE-A1-102008 039 997
- DE-U1-202007 006 919
- DE-U1-202009 009 719

## Beschreibung

Die Erfindung betrifft eine Bodenbearbeitungsmaschine gemäß des Oberbegriffes des Patentanspruches 1.

Eine derartige Bodenbearbeitungsmaschine ist in DE 10 2008 039 997 A1 beschrieben. Diese Bodenbearbeitungsmaschine ist in Form einer Kreiselegge oder eines Kreiselgrubbers mit in einer Reihe quer zur Fahrtrichtung nebeneinander angeordneten, zwangsläufig angetriebenen und Bodenbearbeitungszinken aufweisenden Werkzeugkreiseln ausgebildet. Hinter den Bodenbearbeitungszinken ist mittels nach vorn ragender Tragarme, die jeweils mittels eines Gelenkes, deren Gelenkachse jeweils quer zur Fahrtrichtung weist, am Rahmen der Bodenbearbeitungsmaschine in höhenverstellbarer Weise eine Nachlaufwalze angeordnet. Hierdurch kann die Arbeitstiefe der Bodenbearbeitungszinken eingestellt werden. An jedem seitlichen Ende der Kreiselreihe sind in Arbeitsrichtung der Maschine weisende, stehend angeordnete und höhenbewegbare Seitenschilde angeordnet. Die Seitenschilde sind mittels in Richtung Maschinenmitte ragender Seitenschildarme mittels Gelenken, deren jeweilige Schwenkachse in Fahrtrichtung weisen, am Rahmen der Bodenbearbeitungsmaschine in Höhenrichtung bewegbar angelenkt. Die Seitenschilde sind an den Seitenschildarmen jeweils mittels Stelleinrichtungen, die beispielsweise als Schraubbolzen ausgebildet sind, höhenverstellbar befestigt. Über diese Stelleinrichtungen müssen die Seitenschilde gegenüber den Seitenschildarmen zur Anpassung an die Arbeitstiefe der Bodenbearbeitungszinken zumindest bei größerer Verstellung der Arbeitstiefe der Bodenbearbeitungszinken ebenfalls in einem separaten Arbeitsgang durch Lösen der Stelleinrichtung in der Höhe verstellt werden. Dieses erfordert zusätzliche Zeit.

Der Erfindung liegt die Aufgabe zu Grunde, die Anpassung der Höhenlage der Seitenschilde an die Arbeitstiefe der Bodenbearbeitungszinken bei deren Verstellung durch Höhenverstellung der Nachlaufwalze wesentlich zu vereinfachen.

Diese Aufgabe der erfindungsgemäß durch die kennzeichnenden Merkmale des Anspruches 1 gelöst.

Infolge dieser Maßnahme wird das Seitenschild in seiner Höhenlage zu den Bodenbearbeitungszinken automatisch an die Arbeitstiefe der Bodenbearbeitungszinken bei Verstellung der Nachlaufwalze gegenüber dem Bodenbearbeitungszinken angepasst. In Abhängigkeit der Stellung des jeweiligen Tragarmes der Nachlaufwalze zwischen der Bodenbearbeitungsmaschine und der Nachlaufwalze wird durch die zwischen den jeweiligen Tragarmen der Nachlaufwalze und dem jeweiligen Seitenschildarm angeordnete Betätigungsvorrichtung das Seitenschildarm entsprechend angehoben oder abgesenkt. Somit entfällt der separate Arbeitsgang, die Seitenbleche in ihrer Höhenlage an die jeweilige Arbeitstiefe der Bodenbearbeitungszinken anzupassen. Somit wird das Seitenschild jeweils in der vorgeschriebenen definierten Höhe in Abhängigkeit der Arbeitstiefe der Bodenbearbeitungszinken und somit der Höhenlage des Rahmens der Bodenbearbeitungsmaschine gegenüber dem Boden gehalten. Durch eine Federanordnung, die optional zwischen dem Rahmen und dem Schildarm angeordnet sein kann, kann über die Federanordnung und den Schildarm das Seitenschildarm in Richtung des Bodens gedrückt werden und andererseits beim Auflaufen auf Hindernissen nach oben gegen die Federkraft der Federanordnung ausweichen.

In einfacher Weise kann die jeweilige Verstellungsbewegung der Nachlaufwalze auf den Seitenschildarm dadurch übertragen werden, dass der jeweilige Tragarm ein über das Gelenk nach vorn hinausragendes Verlängerungsstück aufweist, dass der jeweilige Seitenschildarm ein über das Gelenk nach vorn hinausragendes Verlängerungsstück aufweist, dass zwischen dem Verlängerungsstück des Tragarmes und dem Verlängerungsstück des Seitenschildarmes die Betätigungsvorrichtung angeordnet ist.

Alternativ ist es auch möglich, die Verstellung des Seitenschildarmes bzw. des Seitenschildarmes in Abhängigkeit von der Verstellung der Nachlaufwalze zu den Bodenbearbeitungszinken durch zugeordnete hydraulische Geber- und Nehmerzylinder, die miteinander verbunden sind, übertragen. Auch ist es möglich, entsprechende Sensoren und/oder zugeordnete hydraulische und/oder elektrische Stellaktoren hierfür vorzusehen.

Bei einer mechanischen Übertragungseinrichtung durch eine entsprechend ausgestaltete mechanische Betätigungsvorrichtung ist vorgesehen, dass die Betätigungsvorrichtung ein Gelenkstab ist, der jeweils mittels Gelenkelemente an den Verlängerungsstücken angelenkt ist.

Um die Einstellung des Seitenschildarmes in einfacher Weise an verschiedene Bedingungen anpassen zu können, ist vorgesehen, dass der Gelenkstab längenveränderbar ausgebildet ist. In einer Ausgestaltung kann hierbei der Gelenkstab als Schraubenspindel ausgebildet sein.

In bevorzugter Weise ist die Verstellung des Seitenschildes in Abhängigkeit von der Höhenverstellung der Nachlaufwalze zu den Bodenbearbeitungszinken derart ausgestaltet, dass bei Höhenverstellung der Nachlaufwalze gegenüber den Werkzeugkreiseln gleichzeitig die Seitenschilde zumindest annähernd in gleicher Weise in der Höhe verstellt werden.

Zusammenfassend werden folgende Vorteile erreicht:
Durch die erfindungsgemäße Kopplung des jeweiligen Tragarmes mit dem jeweiligen Seitenschildarm wird eine automatische Anpassung der Einstellung des jeweiligen Seitenschildes an die Arbeitstiefe der Bodenbearbeitungswerkzeuge erreicht. In Abhängigkeit der Stellung des Tragarmes der Nachlaufwalze wird das Seitenblech über die erfindungsgemäße Kopplung der Tragarme der Nachlaufwalze und der Seitenschildarme entsprechend der eingestellten Arbeitstiefe der Bodenbearbeitungswerkzeuge entsprechend angehoben oder abgesenkt. Somit wird die Seitenschildposition automatisch an die jeweilige Arbeitstiefe der Bodenbearbeitungswerkzeuge angepasst. Je nach Arbeitstiefe des Bodenbearbeitungswerkzeuges wird das Seitenschild in einer definierten Höhe gehalten. Über die jeweilige Stellung (Winkelstellung) des Tragarmes der Nachlaufwalze zu dem Bodenbearbeitungsgerät wird die Höhe des Seitenschildes eingestellt.

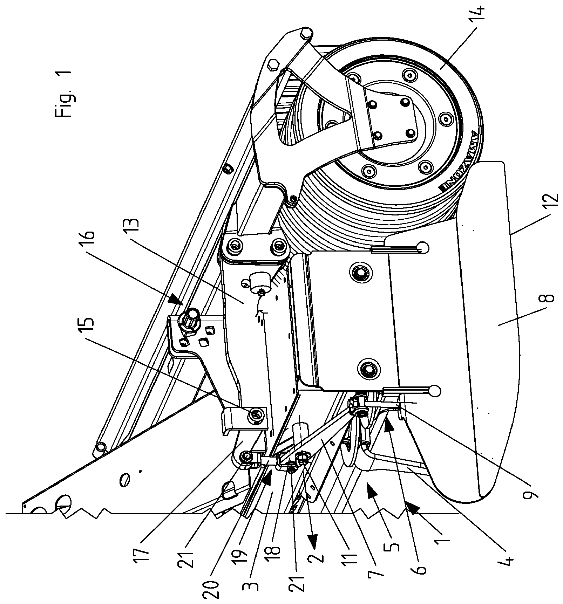

Weitere Einzelheiten der Erfindung sind der Beispielsbeschreibung und den Zeichnungen zu entnehmen. Die Zeichnungen zeigen
- Fig.1: die als Kreiselgrubber ausgebildete motorisch angetriebene Bodenbearbeitungsmaschine mit nachgeordneter Nachlaufwalze mit einer relativ geringen Arbeitstiefeneinstellung für die Bodenbearbeitungszinken in perspektivischer Ansicht in Teilansicht, wobei den Fahrtrichtung gesehen linke Teil der Maschine dargestellt ist,

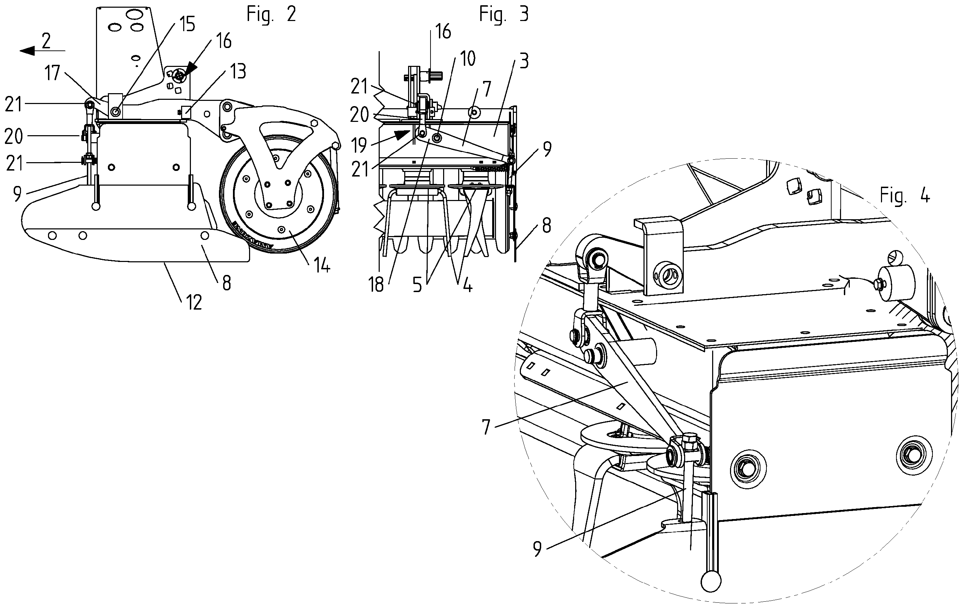

- Fig.2: die Bodenbearbeitungsmaschine gemäß Fig. 1 in Seitenansicht und verkleinertem Maßstab,
- Fig.3: der in Fahrtrichtung gesehen linke Teil der Bodenbearbeitungsmaschine gemäß Fig.1 in Vorderansicht und verkleinertem Maßstab,
- Fig.4: die Betätigungsvorrichtung zwischen Tragarm und Seitenschildarm gemäß der Darstellungsweise in Fig.1 entsprechend der geringen Arbeitstiefeneinstellung, jedoch in Teilansicht und vergrößertem Maßstab,

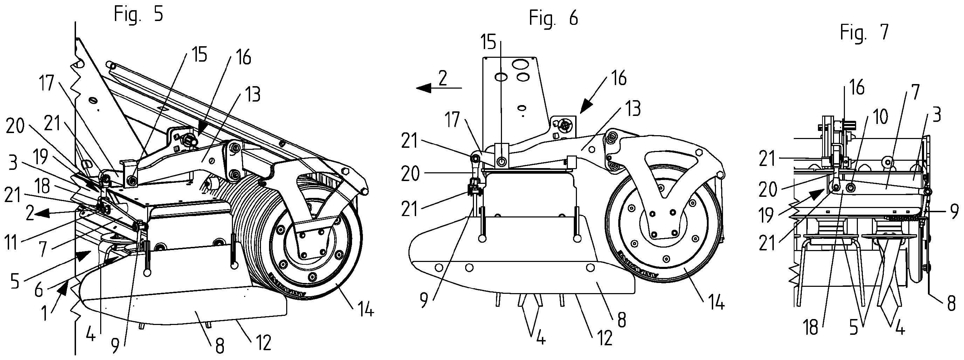

- Fig.5: die als Kreiselgrubber ausgebildete motorisch angetriebene Bodenbearbeitungsmaschine mit nachgeordneter Nachlaufwalze mit einer relativ größeren Arbeitstiefeneinstellung für die Bodenbearbeitungszinken in perspektivischer Ansicht in Teilansicht, wobei den Fahrtrichtung gesehen linke Teil der Maschine dargestellt ist,
- Fig.6: die Bodenbearbeitungsmaschine gemäß Fig. 5 in Seitenansicht und verkleinertem Maßstab und
- Fig.7: der in Fahrtrichtung gesehen linke Teil der Bodenbearbeitungsmaschine gemäß Fig.5 in Vorderansicht und verkleinertem Maßstab.

Die als Kreiselgrubber 1 ausgebildete angetriebene Bodenbearbeitungsmaschine weist den sich quer zur Fahrtrichtung 2 erstreckenden Kastenbalken 3 auf. Dieser Kastenbalken 3 ist als Getriebewanne ausgebildet. In dem Kastenbalken 3 sind mehrere rotierend angetriebene und Bodenbearbeitungswerkzeuge 4 tragende Werkzeugkreisel 5 angeordnet. Benachbarte Werkzeugkreisel 5 werden über den in der Getriebewanne 3 angeordneten Stirnradantrieb gegensinnig rotierend angetrieben. An jedem seitlichen Ende 6 der Kreiselreihe der Werkzeugkreisel 5 ist mittels eines als Gelenkarm ausgebildeten Seitenschildarmes 7 ein Seitenschild 8 stehend und höhenbewegbar angeordnet. Jedes Seitenschild 8 ist gegenüber dem Seitenschildarm 7 mittels Schraubbolzen 9 höhenverstellbar und an diesem befestigt. Der jeweilige Seitenschildarm 7 ist mittels eines Gelenkes 10, welches sich beabstandet zu dem Ende des Kastenbalkens 3 befindet, an dem Kastenbalken gelenkig oder drehbar angeordnet. Mittels dieses Gelenkes 10 kann der Seitenschildarm 7 mit dem Seitenschild 8 um die Gelenkachse 11 des Gelenkes 10, die in Fahrtrichtung 2 verläuft, schwenken so dass das Seitenschild 8 sich in der Höhe bewegen kann. Das Seitenschild 8 steht mit seiner Unterkante 12 auf dem Boden auf und kann aufgrund der vorbeschriebenen gelenkigen Anordnung der Bodenoberfläche folgen. Bei dem Auftreffen aus der Bodenoberfläche herausragenden Hindernissen kann das Seitenschild 8 nach oben ausweichen.

Hinter den Bodenbearbeitungswerkzeugen 4 der Werkzeugkreisel 5 ist in höhenverstellbarer Weise mittels Tragarmen 13 eine Nachlaufwalze 14 angeordnet. Die Tragarme 13 sind an dem Kastenbalken mittels der Gelenkanordnung 15, deren Gelenkachse quer zur Fahrtrichtung 2 verläuft, an dem Kastenbalken 3 befestigt. Auf der Rückseite des Kastenbalkens 3 befindet sich zwischen dem Kastenbalken 3 und den Tragarmen 13 die Tiefeneinstellungsvorrichtung 16 zur Einstellung der Arbeitstiefe der Bodenbearbeitungswerkzeuge 4.

Der jeweilige Tragarm 13 weist ein über das Gelenk der Gelenkanordnung 15 nach vorn hinausragendes Verlängerungsstück 17 auf. Weiterhin weist der jeweilige Seitenschildarm 7 ein über das Gelenk 10 nach vorn hinausragendes Verlängerungsstück 18 auf. Zwischen dem jeweiligen Verlängerungsstück 17 des jeweiligen Tragarmes 13 und dem jeweiligen Verlängerungsstück 18 des jeweiligen Seitenschildarmes 7 ist jeweils eine Betätigungsvorrichtung 19 angeordnet. Diese Betätigungsvorrichtung 19 ist ein Gelenkstab 20, der jeweils mittels Gelenkelementen 21 an den Verlängerungsstücken 17 und 18 angelenkt ist. Somit ist zwischen den jeweiligen Tragarmen 13 der Nachlaufwalze 14 und dem jeweiligen Seitenschildarm 7 jeweils eine Betätigungsvorrichtung 19 zur Höhenverstellung des zugeordneten Seitenschildes 8 angeordnet. Der Gelenkstab 20 ist vorzugsweise längenveränderbar und als Schraubenspindel ausgebildet. Durch die entsprechende Ausgestaltung der Betätigungselemente 19 werden bei Höhenverstellung der Nachlaufwalze 14 gegenüber den Werkzeugkreiseln 5 gleichzeitig die Seitenschilde 8 zumindest annähernd in gleicher Weise in der Höhe verstellt.

Somit erfolgt also bei der Tiefeneinstellung der Bodenbearbeitungswerkzeuge 4 durch die Verstellung der Nachlaufwalze 14 gegenüber den Bodenbearbeitungswerkzeugen 4 gleichzeitig auch eine entsprechende Anpassung der Höhenlage der Seitenschilde zu der Bodenoberfläche.

## Patentansprüche

1. Bodenbearbeitungsmaschine, vorzugsweise in Form einer Kreiselegge oder Kreiselgrubber, mit in einer Reihe quer zur Fahrtrichtung nebeneinander angeordneten, zwangsläufig angetriebenen und Bodenbearbeitungszinken aufweisenden Werkzeugkreiseln, einer hinter ihnen mittels nach vorn ragender Tragarme, die jeweils mittels eines Gelenkes, deren Gelenkachse jeweils quer zur Fahrtrichtung weist, am Rahmen der Bodenbearbeitungsmaschine in höhenverstellbarer Weise angeordneten Nachlaufwalze und an jedem seitlichen Ende der Kreiselreihe in Arbeitsrichtung der Maschine weisende, stehend angeordnete und höhenbewegbare Seitenschilde, wobei die Seitenschilde mittels in Richtung Maschinenmitte ragender Seitenschildarme mittels Gelenken, deren jeweilige Schwenkachse in Fahrtrichtung weisen am Rahmen der Bodenbearbeitungsmaschine in Höhenrichtung bewegbar angelenkt sind, **dadurch gekennzeichnet, dass** zwischen den jeweiligen Tragarmen (13) der Nachlaufwalze (14) und dem jeweiligen Seitenschildarm (7) jeweils eine die Tragarme (13) und die Seitenschildarme (7) miteinander koppelnde Betätigungsvorrichtung (19) zur Höhenverstellung des zugeordneten Seitenschildes (8) angeordnet ist.

2. Bodenbearbeitungsmaschine nach Anspruch 1, **dadurch gekennzeichnet, dass** der jeweilige Tragarm (13) ein über das Gelenk (15) nach vorn hinausragendes Verlängerungsstück (17) aufweist, dass der jeweilige Seitenschildarm (7) ein über das Gelenk (10) nach vorn hinausragendes Verlängerungsstück (18) aufweist, dass zwischen dem Verlängerungsstück (17) des Tragarmes (13) und dem Verlängerungsstück (18) des Seitenschildarmes (7) die Betätigungsvorrichtung (19) angeordnet ist.

3. Bodenbearbeitungsmaschine nach Anspruch 2, **dadurch gekennzeichnet, dass** die Betätigungsvorrichtung (19) ein Gelenkstab (20) ist, der jeweils mittels Gelenkelementen (21) an den Verlängerungsstücken (17,18) angelenkt ist.

4. Bodenbearbeitungsmaschine nach Anspruch 3, **dadurch gekennzeichnet, dass** der Gelenkstab (20) längenveränderbar ausgebildet ist.

5. Bodenbearbeitungsmaschine nach Anspruch 4, **dadurch gekennzeichnet, dass** der Gelenkstab (20) als Schraubenspindel ausgebildet ist.

6. Bodenbearbeitungsmaschine nach zumindest einem der vorstehenden Ansprüche, **dadurch gekennzeichnet, dass** bei Höhenverstellung der Nachlaufwalze (14) gegenüber den Werkzeugkreiseln (5) gleichzeitig die Seitenschilde (8) zumindest annähernd in gleicher Weise in der Höhe verstellt werden.

## Claims

1. Soil processing machine, preferably in the form of a rotary harrow or rotary cultivator, with tool rotors which are arranged next to one another in a row transversely with respect to the direction of travel, are forcibly driven and have soil processing tines, a trailing roller which is arranged on the frame of the soil processing machine in a height-adjustable manner behind said tool rotors by means of forwardly projecting supporting arms, which in each case by means of a hinge, the hinge axis of which in each case points transversely with respect to the direction of travel, and height-movable side shields which, at each lateral end of the row of rotors point in the working direction of the machine and are arranged perpendicularly, wherein the side shields are coupled to the frame of the soil processing machine in a manner movable in the vertical direction by means of side shield arms, which project in the direction of the centre of the machine, by means of hinges, the respective pivot axis of which point in the direction of travel, **characterized in that** an actuating device (19) coupling the supporting arms (13) and the side shield arms (7) to one another is arranged in each case between the respective supporting arms (13) of the trailing roller (14) and the respective side shield arm (7), for the height adjustment of the associated side shield (8).

2. Soil processing machine according to Claim 1, **characterized in that** the respective supporting arm (13) has an extension piece (17) projecting forwards beyond the hinge (15), **in that** the respective side shield arm (7) has an extension piece (18) projecting forwards beyond the hinge (10), and **in that** the actuating device (19) is arranged between the extension piece (17) of the supporting arm (13) and the extension piece (18) of the side shield arm (7).

3. Soil processing machine according to Claim 2, **characterized in that** the actuating device (19) has a hinge bar (20) which is in each case coupled to the extension pieces (17, 18) by means of hinge elements (21).

4. Soil processing machine according to Claim 3, **characterized in that** the hinge bar (20) is designed so as to be changeable in length.

5. Soil processing machine according to Claim 4, **characterized in that** the hinge bar (20) is designed as a screw spindle.

6. Soil processing machine according to at least one of the preceding claims, **characterized in that**, during the height adjustment of the trailing roller (14) in relation to the tool rotors (5), the side shields (8) are simultaneously adjusted in height at least approximately in the same manner.

## Revendications

1. Machine de travail du sol, de préférence sous la forme d'une herse rotative ou d'un cultivateur rotatif, comprenant des outils rotatifs disposés les uns à côté des autres en rangée transversalement par rapport à la direction de conduite, entraînés par force et présentant des dents de travail du sol, un cylindre suiveur disposé derrière lesdites dents de travail du sol, sur le châssis de la machine de travail du sol de manière réglable en hauteur au moyen de bras de support faisant saillie vers l'avant, qui à chaque fois au moyen d'une articulation dont l'axe d'articulation est à chaque fois orienté transversalement par rapport à la direction de conduite, et des panneaux latéraux déplaçables en hauteur et disposés debout, tournés dans la direction de travail de la machine à chaque extrémité latérale de la rangée d'outils rotatifs, les panneaux latéraux étant articulés de manière déplaçable dans la direction en hauteur sur le cadre de la machine de travail du sol au moyen de bras de panneaux latéraux faisant saillie dans la direction du centre de la machine au moyen d'articulations dont l'axe de pivotement respectif sont orientés dans la direction de conduite, **caractérisée en ce qu'**entre les bras de support respectif (13) du cylindre suiveur (14) et le bras de panneau latéral respectif (7) est à chaque fois disposé un dispositif d'actionnement (19) accouplant l'un à l'autre les bras de support (13) et les bras de panneaux latéraux (7) pour le réglage en hauteur du panneau latéral associé (8).

2. Machine de travail du sol selon la revendication 1, **caractérisée en ce que** le bras de support respectif (13) présente une pièce de prolongement (17) faisant saillie vers l'avant au-delà de l'articulation (15), **en ce que** le bras de panneau latéral respectif (7) présente une pièce de prolongement (18) faisant saillie vers l'avant au-delà de l'articulation (10), **en ce qu'**entre la pièce de prolongement (17) du bras de support (13) et la pièce de prolongement (18) du bras de panneau latéral (7) est disposé le dispositif d'actionnement (19).

3. Machine de travail du sol selon la revendication 2, **caractérisée en ce que** le dispositif d'actionnement (19) est une barre articulée (20) qui est à chaque fois articulée au moyen d'éléments d'articulation (21) aux pièces de prolongement (17, 18).

4. Machine de travail du sol selon la revendication 3, **caractérisée en ce que** la barre d'articulation (20) est réalisée de manière réglable en longueur.

5. Machine de travail du sol selon la revendication 4, **caractérisée en ce que** la barre d'articulation (20) est réalisée sous forme de broche à vis.

6. Machine de travail du sol selon au moins l'une quelconque des revendications précédentes, **caractérisée en ce que** lors du réglage en hauteur du cylindre suiveur (14) par rapport aux outils rotatifs (5), les panneaux latéraux (8) sont simultanément réglés en hauteur au moins de manière approximativement identique.
